# EUROPEAN PATENT SPECIFICATION

(11) **EP 1 947 811 B1**
(45) Date of publication and mention of the grant of the patent: **07.03.2018**
(21) Application number: 07001338.8
(22) Date of filing: 22.01.2007
(51) Int. Cl.: H04W 48/16

(54) **DISCOVERY AND CONFIGURATION METHOD FOR A NETWORK NODE**
ERKENNUNG UND KONFIGURATIONSVERFAHREN FÜR EINEN NETZWERKKNOTEN
PROCÉDÉ DE DÉCOUVERTE ET DE CONFIGURATION D'UN NOEUD DE RÉSEAU

(43) Date of publication of application: 23.07.2008
(73) Proprietor: Nokia Solutions and Networks GmbH & Co. KG, 81541 München (DE)
(72) Inventor: Baumgarth, Thomas, 81371 München (DE); Keutner, Konstantin, Dr., 85579 Neubiberg (DE); Sanneck, Henning, Dr., 81669 München (DE); Schmelz, Lars, Christoph, 85540 Haar (DE); Ulrich, Thomas, 67098 Bad Dürkheim (DE)

(56) References cited:
- EP-A- 1 560 451
- EP-A2- 1 318 688
- WO-A-02/07467
- US-A1- 2003 095 520
- US-A1- 2006 211 431
- US-B1- 6 292 891

## Description

The method relates to a method for discovering neighboring network nodes by a network node and to a configuration server for auto-configuration of a network node.

The integration of a network node in a network, e. g. of a base station of a mobile radio network or a relocation of a placed network node causes considerable configuration efforts at the manufacturing factory of the network node or on the respective site. In many cases, most of the configuration data for a network node is entered at the manufacturing factory into the network node according to input provided by the corresponding network operator. Thus, the network node is preconfigured by the manufacturer. When the network node is delivered to the planned location, only few configuration data has to be input at the respective location site by a technician. The manufacturer preconfiguration only works if the network node is delivered to the planned location and is void if the network node is delivered to stock or another location.
As state of the art the complete configuration is often performed manually by a technician at the location of a network node. In this full on-site configuration, the technician who installs the network node, manually configures the network node according to a print-out of the configuration data of the network node as planned by means of a planning tool. The manual configuration data includes, for instance, an address and additional identifying attributes which uniquely identify the respective network node. The full on-site configuration requires a high degree of skilled manual effort.

Existing conventional automatic configuration methods for network nodes reduce this configuration effort by enabling to retrieve configuration data for a new or relocated network node from a preconfigured configuration planning data base containing a so-called network plan.

These automatic configuration methods are performed by means of a standard IETF-protocol DHCP or similar data protocols. A precondition of such an auto-configuration is that a mapping of the network node to a planned network node of a network plan can be made so that a current set of configuration parameters can be applied to the located or relocated network node. This is performed by planning a designated physical network node at a particular location identified by a physical identifier in the corresponding network plan. However, the conventional auto-configuration method by means of the DHCP-protocol or similar data protocols requires an exact mapping between the pieces of hardware that have to be installed and the location. The identification of a network node by a hardware dependent identifier has the disadvantage that the administrative overhead of a network installation staff is increased, because it is not possible to install any network node of a particular type which is in stock at a particular location. A further disadvantage is that the administrative overhead is increased for the network operator, the network node manufacturer, and the installing technician, since the network operator has to plan the network with a very high level of detail and co-ordinate and exchange the necessary configuration data with the node manufacturer and the installing technician. However, the network operator is only interested in certain network node functions provided at certain locations. Under normal circumstances, a network operator is not interested in a particular piece of hardware used to provide desired functions.

In many applications, the network nodes need to discover neighboring nodes in geographical rather than topological terms. For instance, it might be necessary to establish an interface connection between neighboring network nodes.

Often, physical proximity between network nodes implies also a logical relationship between the network nodes, e. g. in terms of the configuration of the neighboring network nodes. These relationships can require some coordination between two or more network nodes, because a network operator either cannot or does not want to plan all the details of the relationship in advance. This is particular important for network nodes which require a direct communication with adjacent network nodes. For instance, base station network nodes of a mobile access network such as GSM-base stations, UMTS-base stations, WiMax-base stations or WLAN-base stations have to coordinate the management of the radio resources and have to coordinate a handover of mobile network nodes between the respective radio ranges of the base stations. Other possible reasons that require a direct communication between network nodes such as base stations is, for instance, a redundancy mechanism between network nodes and the above-mentioned automated configuration and optimization of the respective network node.

In many cases, a geographical neighborhood between two network nodes implies a relationship between neighboring network nodes. Examples for such network nodes are devices like remotely configurable traffic signs, smoke sensors or industrial sensors/actuators.

The physical proximity between network nodes which form geographical neighbors does not mean that they are close in terms of wired network topology. In many cases, network nodes neighboring to each other geographically are distant to each other in terms of wired network topology. A neighbor node discovery which is limited to a physical local link is not sufficient since the network node may be attached to distant parts of the wired network.

A neighbor node discovery over a wireless medium is unreliable and may disturb other traffic. Moreover, such a discovery method may be impossible because the neighboring node may be mutually unreachable over the air, but reachable by another device, e. g. reachable for user equipment which can access both network nodes. Sensing of a neighboring network node over the wireless medium and adjusting autonomously the configuration and behaviour of the network node accordingly, e. g. switching to another radio channel, requires wireless connectivity to the adjacent network node which may not always be available. Furthermore, due to the lack of a third party involved in a possible resulting neighborhood relationship, it is difficult to control such an established neighborhood relationship, e. g., a neighborhood relationship between two network nodes that is not desired by the network operator. US patent publication no. 2003/0095520 relates to a method and apparatus for identifying a node for data communications using its geographical location. US patent publication no. US 2006/0211431 relates to a system and method for determining a base transceiver station location. US patent publication no. US 2006/0227745 relates to a method and system for station location based neighbour determination and handover probability estimation. US patent publication no. 2003/0117966 relates to a system and method for establishing a network within a plurality of interconnected and randomly geographically located nodes, such as wireless devices.

A concentration of the required coordination functions to a central network element, e. g. RNC in 3G-networks, imposes a certain hierarchy of the network architecture and causes additional undesired complexity of the network architecture because an additional central network element is required and the corresponding functions need to be split appropriately between the central network element and the other network nodes.

Accordingly, it is an object of the method according to the present invention to provide a method for discovering neighboring network nodes avoiding the above mentioned disadvantages of conventional discovery methods.

An aspect of the method according to the present invention is to provide a discovery method which does not need a fully centralized planning in advance of the respective network.

A further aspect of the method according to the present invention is that the discovery does not require that the adjacent neighboring network nodes are reachable via unreliable air links.

A further aspect of the method according to the present invention is that the discovery method does not involve the provision of further central elements requiring a hierarchical network architecture with high complexity.

These objects are achieved by a method having the features of main claim 1.

The method according to the present invention provides a method for discovering neighboring network nodes by a network node connected to a configuration server,
wherein said configuration server matches geographical coordinates of said network node with geographical coordinates of other network nodes stored in a data base and transmits a set of identifiers of the matching neighboring network nodes to said network node.

In one embodiment of the method according to the present invention, said set of identifiers of a neighboring network node comprises as identifiers an IP-address of the neighboring network node and a radio setting of the neighboring network node.

In one embodiment of the method according to the present invention, the network node sends a request message to the configuration server containing geographical coordinates of the network node.

In a further embodiment of the method according to the present invention, the configuration server sends a return message to the network node containing a set of identifiers for each neighboring node of said network node.

In a further embodiment of the method according to the present invention, the return message further contains the geographical coordinates of the neighboring network nodes of said network node.

In one embodiment of the method according to the present invention, the network node is connected to said configuration server via an operation and maintenance (OAM) network.

In one embodiment of the method according to the present invention, the network node is formed by a base station of a wireless access network.

In one embodiment of the method according to the present invention, the geographical coordinates comprise a latitude, a longitude and an altitude of the network node.

In one embodiment of the method according to the present invention, the network node determines its geographical coordinates by means of a positioning device and transmits its determined geographical coordinates to the configuration server with the request message.

In one embodiment of the method according to the present invention, the positioning device is formed by a GPS-receiver, a Galileo-receiver or a Glonass-receiver.

In one embodiment of the method according to the present invention, the positioning device is connected to the network node.

In an alternative embodiment of the method according to the present invention, the positioning device is integrated in the network node.

In one embodiment of the method according to the present invention, the network node sends a request message containing a device-ID of a device connected to said network node to said configuration server.

In one embodiment of the method according to the present invention, the device-ID is formed by a MSISDN-number of the network node.

In an alternative embodiment of the method according to the present invention, the device-ID is formed by an IMSI-number of the network node.

In an alternative embodiment of the method according to the present invention, the device-ID is formed by an IMEI-number of the network node.

In one embodiment of the method according to the present invention, the device-ID is forwarded by said configuration server to a mobile network server comprising a data base having for each device-ID associated geographical coordinates of the device connected to said network node.

In one embodiment of the method according to the present invention, the geographical coordinates of the device connected to said network node are transmitted by the mobile network server to said configuration server for matching with the geographic coordinates of other network nodes stored in the data base of said configuration server.

In one embodiment of the method according to the present invention, the configuration server decides that the geographical coordinates of the requesting network node and the geographical coordinates of another network node stored in said data base match with each other when the difference between at least one corresponding coordinate of both network nodes is lower than an adjustable threshold value.

In one embodiment of the method according to the present invention, the network node is formed by an immobile network node.

In an alternative embodiment of the method according to the present invention, the network node is formed by a mobile network node.

The invention further provides a configuration server for auto-configuration of a network comprising network nodes connected to said configuration server,
wherein said configuration server matches geographical coordinates of a requesting network node with geographic coordinates of other network nodes of said network stored in a data base and transmits a set of identifiers of the matching network nodes to the requesting network node.

In one embodiment of the configuration server according to the present invention, the configuration server transmits configuration data to the requesting network node.

The invention further provides a network node connected to a configuration server,
wherein said network node sends a request message to the configuration server which matches geographical coordinates of said network node with geographical coordinates of other network nodes and transmits a return message which is received by said requesting network node containing a set of identifiers of the matching neighboring network nodes.

In a preferred embodiment of the network node according to the present invention, the network node is formed by a base station of a wireless access network.

In the following, preferred embodiments of the method and the server according to the present invention are described with reference to the enclosed figures.
Figure 1 shows an example for a network comprising several network nodes according to the present invention;
figure 2 shows a diagram illustrating an embodiment of the method according to the present invention;
figure 3 shows a diagram illustrating a further embodiment of the method according to the present invention;
figure 4 shows a diagram of a network architecture according to one embodiment of the present invention.

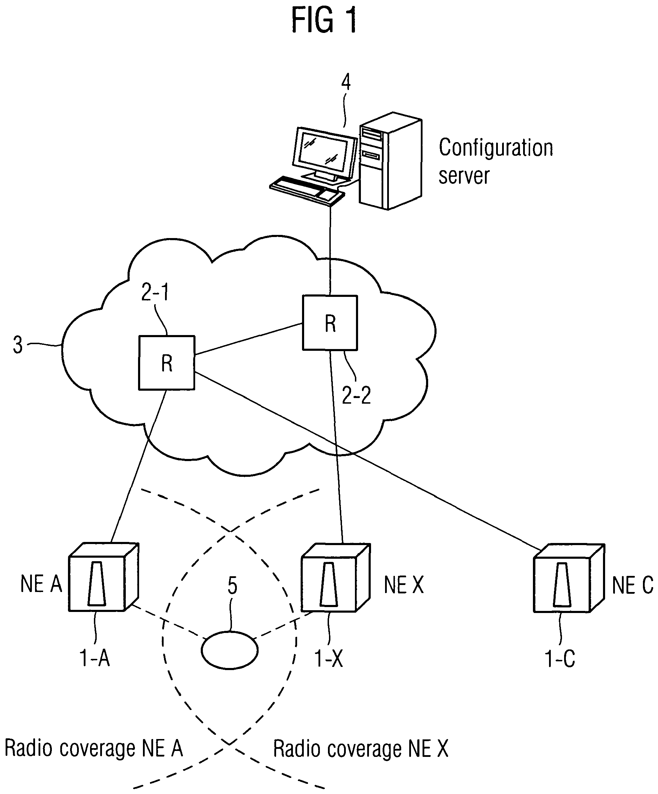

As can be seen from figure 1, several network elements NE or network nodes 1-i are connected via routers 2 of an operation and maintenance network 3 to a configuration server 4. In the example shown in figure 1, the network nodes 1 are formed by base stations BS of a wireless access network. In the example of figure 1, the network node 1-A has a radio coverage NEA and the network node 1-x has a radio coverage NEX overlapping each other. A mobile node 5 such as a mobile phone can connect to both network elements or network nodes 1-A, 1-x via a radio link. As can be seen from figure 1, network nodes 1-A, 1-x are geographical neighbors but not topological neighboring nodes since they are connected to different routers 2-1, 2-2 of the operation and maintenance network 3. Furthermore, the neighboring nodes 1-A, 1-x cannot communicate directly with each other via radio link, although they are neighboring network nodes and although the mobile phone 5 can connect to both base stations 1-A, 1-x via a radio link.

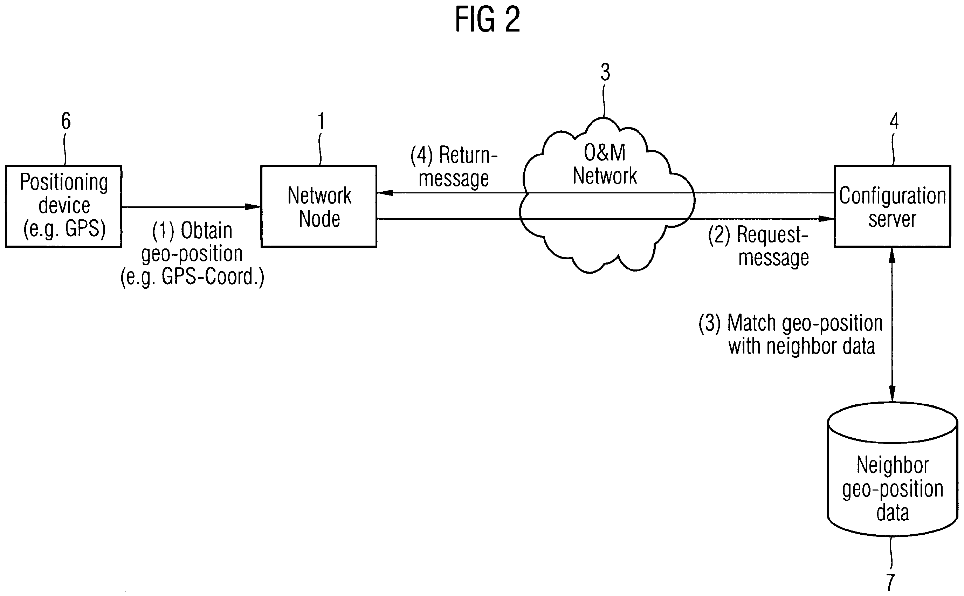

Figure 2 shows a first embodiment of a method according to the present invention for discovering neighboring network nodes by a network node 1. In the embodiment shown in figure 2, the network node 1 performs a direct determination of its coordinates by means of a positioning device. After a start-up of the network node 1 or during booting of the network node 1, the network node 1 sends a request message to the configuration server 4 via the operation and maintenance network 3 containing the geographical coordinates x, y, z of the network node 1. The network node 1 determines its geographical coordinates, x, y, z by means of a positioning device 6 which is formed, for example, by a GPS-receiver, a Galileo-receiver or a Glonass-receiver. This positioning device 6 is either attached temporarily or permanently to the network node 1. Furthermore, the positioning device 6 can be integrated in the network node 1.

In a preferred embodiment, the geographical coordinates determined by the positioning device 6 comprise a latitude x, a longitude y and an altitude z of the network node 1.

In an alternative embodiment, the geographical coordinates comprise only the latitude x and the longitude y of network node 1.

In an alternative embodiment, the positioning device 6 supplies the network node 1 with the latitude x and the longitude y of the location where the network node 1 is placed. In an exceptional case, an automated positioning of the network 1 node by means of the positioning device 6 is not possible, so that the position data, i. e. the coordinates, are entered manually by the installer. It is sufficient to determine the position or location of the network node 1 once if the location of the network node 1 is not changed thereafter. In the shown example, the network node 1-x as shown in figure 1 contacts the configuration server 4, wherein the request message sent by the network node 1 to the configuration server 4 contains the geographical coordinates x, y, z of the network node 1-x.

In a further step, the configuration server 4 compares the received geographical coordinates x, y, z of the network node 1-x with geographical coordinates x, y, z of other network nodes stored in a data base 7 which is connected to the configuration server 4. In a possible embodiment, the configuration server 4 decides by using a dedicated algorithm that the geographical coordinates of the requesting network node 1-x and the geographical coordinates of another network node stored in the data base 7 match with each other, thereby identifying the network node and the other network node as neigbors. In a possible embodiment the named algorithm verifies if at least one corresponding coordinate x, y, z of both network nodes is lower than an adjustable threshold value.

For determining which nodes form neighbor nodes to a new network node, there are different possibilities. In one embodiment, the relationship between neighboring network nodes are preplanned and stored in a planning or configuration data base of the network operator. In an alternative embodiment, the neighboring network nodes are calculated using a dedicated algorithm. In a possible embodiment, the dedicated algorithm calculates the distance between nodes based on the coordinates of the network nodes. The dedicated algorithm calculates from the available data of other network nodes stored in the configuration data base the distance between the respective network nodes. In a preferred embodiment, the dedicated algorithm also takes into account other information, such as geographical peculiarities of the landscape, data from the frequency assignments of the network operator, electro-magnetic interferences and antenna settings, such as antenna tilt and antenna orientation. In all embodiments, the geo-location data is used for identifying the respective network nodes of a network.

In a possible embodiment, the data stored in the data base 7 is formed by planning data generated by a planning tool.

In an alternative embodiment, the data stored in the data base 7 is acquired by evaluating request messages sent by different network nodes 1-i.

In another embodiment, the data stored in the data base 7 is acquired by both, using existing planning data and using acquired data transmitted with request messages.

When the configuration server 4 decides that the geographical coordinates of the requesting network node 1-x and the geographical coordinates of a network node stored in the data base 7 do match, the configuration server 4 transmits a set of identifiers of the matching neighboring network node stored in the data base 7 to the requesting network node 1 via the operation and maintenance network 3. Furthermore, the configuration server 4 adds or updates a data-set containing the identifier for network node 1-x and its location to the data base 7. A sufficiently good match can be made by the configuration server 4 for one or more other network nodes 1, e. g. network node 1-A and 1-C shown in figure 1. When the configuration server 4 determines that the network node 1-x is a neighbor of the other network nodes, for example network nodes 1-A and 1-C, the configuration server 4 adds or updates the neighboring nodes 1-A and 1-C to the stored data set of network node 1-x. Furthermore, the configuration server 4 adds the identifier of network node 1-x as a new neighbor node for the data sets of both network nodes 1-A and 1-C. However, if no sufficiently good match can be made by the configuration server 4, no neighboring nodes are added to the data set of the requesting network node 1-x.

When the configuration server 4 has accomplished the matching it sends a return message in case of a successful match. The return message contains information data on the neighboring network nodes, e. g. network nodes 1-A and 1-C of the requesting network node 1-x.

In a possible embodiment, additional configuration data and geographical location data is contained in the return message as well. For example, in a possible embodiment, the configuration server 4 does not only transmit a set of identifiers of the matching neighboring network nodes 1-A and 1-C of the requesting network node 1-x, and also the geographical coordinates x, y, z of the neighboring network nodes 1-A, 1-C. In this embodiment, the network node 1 can evaluate itself the supplied coordinates and decide itself whether the neighboring network nodes 1-A, 1-C are sufficiently close for the respective purpose or application.

After having sent the return message to the requesting network node 1-x, the configuration server 4 further sends update messages to the neighboring network nodes 1-A and 1-C identifying network node 1-x as a new neighbor. This is not performed if the new network node 1-x has been added to an IP-multicast group for reachability. The set of identifiers is transmitted to the inquiring network node 1-x and can comprise any useful identifier for the respective network node 1-x to communicate with its neighboring network nodes. In an possible embodiment, the set of identifiers comprises several identifiers such as an unicast IP-address of the respective neighboring network nodes 1. Alternatively, also an IP-multicast group formed by the members 1-A and 1-C can be transmitted. In the case of a multi-cast group, it is not required to inform the neighboring network nodes 1-A and 1-C explicitly about a new member 1-x, because the communication identifiers are provided with the multicast group-ID. Instead it is required that the network node 1-x joins the multicast group which has been communicated by the configuration server 4. Does the configuration server 4 not find any matching neighboring network node 1, an indication that no network node 1 has been found is transmitted to the inquiring network node 1 in the return message, for instance, by supplying an empty list.

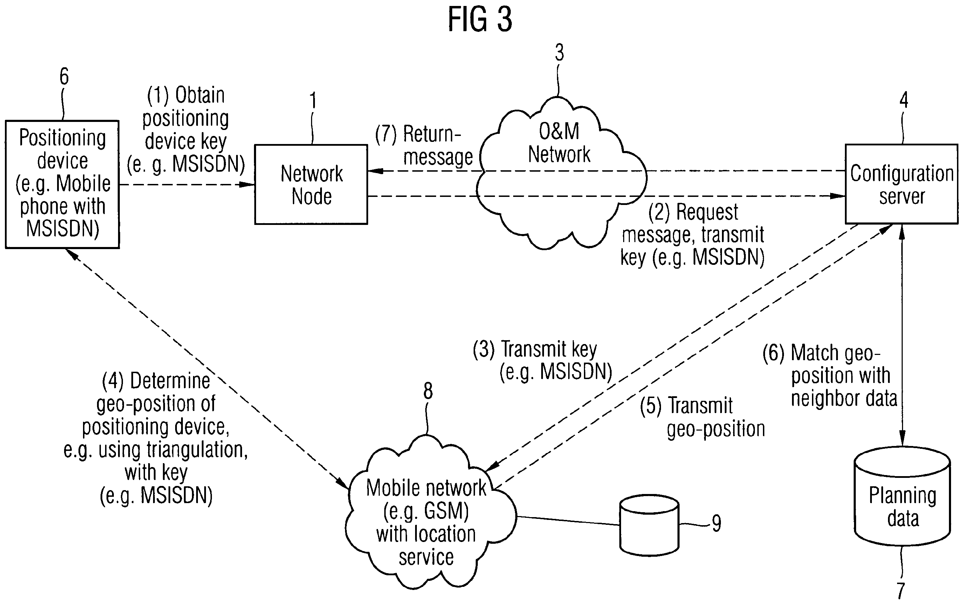

Figure 3 shows an alternative embodiment of the method according to the present invention, wherein the determination of the coordinates of the network node 1-x is performed indirectly using location information data of a mobile network 8. In this embodiment, the network node 1 does not send a request message containing its geographical coordinates but a request message containing a transmission key or device-ID. The transmission key or the device-ID is formed in a possible embodiment by a mobile station international subscriber identification number (MSISDN) of a mobile phone 6 forming a positioning device. Each mobile phone has an individual MSISDN-number identifying the mobile phone. When the mobile phone is connected to the network node 1, the network node 1 sends the MSISDN-number of the mobile phone 6 within the request message to the configuration server 4. The device-ID or device key such as the MSISDN-number is a key suitable for feeding it into a location positioning method of the mobile network 8. The mobile network 8 performs a positioning method such as triangulation. The mobile network 8 comprises a data base 9 of its own having for each device-ID or device key associated geographical coordinates x, y, z of the corresponding positioning device 6. When the positioning device 6 is connected directly to the network node 1, the location of the positioning device 6 and the location of the network node 1 is identical. Accordingly, the configuration server 4 forwards the received device key, e. g. the MSISDN-number of the mobile phone 6 to the mobile network 8 to retrieve the corresponding coordinates x, y, z of the mobile phone 6 stored in the data base 9. After having received the coordinates x, y, z of the positioning device 6, the configuration server 4 performs in a further step the matching of the received coordinates with the geographic coordinates of other network nodes 1 stored in the data base 7. Then, a set of identifiers of the matching neighboring network nodes 1 is transmitted to the requesting network node 1 in a return message.

Other examples for indirect positioning methods include radio frequency identification (RFID) positioning or infrared beacon positioning, e. g. within buildings. Further, triangulation can be performed using the network node's 1 own air interface in case of a base station. In the embodiment as shown in figure 3, the mobile network allocation service is used for indirect positioning wherein a module or a mobile phone 6 attached to the network node 1-i is either temporarily fixed or attached.

To remove a client network node 1-i from the telecommunication system as shown in figures 2, 3 a network node 1-x contacts the configuration server 4 via a removal request message. Then, the configuration server 4 removes an identifier of the network node 1-x from the data sets in the data base 7 which contains the network node 1-x as a neighboring node. In the given example, the configuration server 4 removes the identifier of the network node 1-x from the data sets of network nodes 1-A and 1-C. In a further step, the configuration server 4 removes the data set of the network node 1-x itself in the data base 7. In further steps, the configuration server 4 transmits a return message to the requesting network node 1-x wherein the message contains an acknowledgement of the desired removal. After the network element or network node 1-x has been deleted as a neighbor from the data sets stored in the data base 7, the configuration server 4 sends update messages to the respective network nodes, for example to the network nodes 1-A and 1-C, indicating that the neighboring network node 1-x has been removed. In case of multicast, no update messages are required, because the network element or the network element 1-x leaves the respective multicast group.

In a possible embodiment, the method according to the present invention can be realized with a new data transmission protocol which fulfils the described message sequences. In alternative embodiments, as a legacy protocol, a DHCP-protocol is used to realize the method according to the present invention. Instead of mapping from a MAC-address to an IP-configuration such as IP-address, gateway etc., the mapping from the client network node geo-location to a list of identifiers of other network nodes is performed.

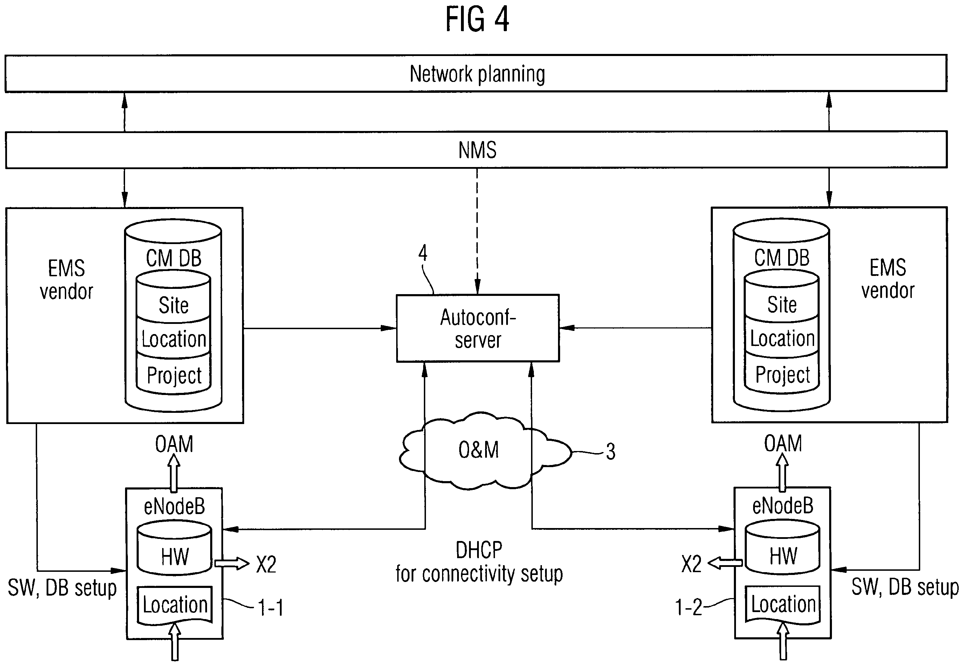

Figure 4 shows a possible network architecture using the method according to the present invention. Figure 4 shows an application of the invention for 3GLTE-eNodeB base stations. The location information is supplied to the eNodeB base stations 1-i by means of above described positioning methods or by manual configuration. The network nodes 1-x are formed by base stations and require information, such as IP-addresses, netmask, gateway etc. including the required coordinates or location as a key identifier to set up an x2-interface connectivity for a 3GLTE-network. With the same message exchange, the network node 1 initially acquires in a possible embodiment its OAM-link configuration with its element manager and connectivity information to reach its associated access gateways. The logical x2-interface allows a direct communication between the network nodes 1-1, 1-2 via the routers 2 of the network 3.

With the method according to the present invention, geographical neighboring nodes 1 of a network can be reliably discovered independent of the specific network topology. This avoids to limit neighbor relationships to just neighboring network nodes which are reachable over the physical link either wired or wireless to which the requesting network node is directly attached. With the method according to the present invention, extensive preplanning efforts for radio networks plus extensive verification to a built radio network with subsequent adjustments to the planning and to the radio network node configurations can be avoided. Even in the absence of extensive preplanning efforts, a centralized control over the neighbor relationships between network nodes is retained.

In a possible embodiment, the usage of a portable positioning device 6, such as GPS-receiver, which needs to be connected only during the installation phase, allows that the network node 1 determines its position once to use the position thereafter as long as a position of the network node 1 does not change. The positioning device 6 which may be too expensive to be built into network node 1 can be reused for subsequent installations of other network nodes 1. In an alternative embodiment equipment that is anyway part of the network node 1, such as its own air interface or a wireless module attached to serve as a backup communication link is used as a positioning device 6. In a further embodiment, a mobile phone 6 carried by an installer can be used in conjunction with the mobile network positioning method to determine the position of the installed network node 1.

## Claims

1. A method for discovering neighboring network nodes by a network node (1) connected to a configuration server (4),
wherein said configuration server (4) compares geographical coordinates of the network node (1) with geographical coordinates of other network nodes stored in a data base (7) and transmits a set of identifiers of matching neighboring network nodes to said network node (1).

2. The method according to claim 1,
wherein said set of identifiers of each neighboring network node comprises as identifiers an IP-address of the neighboring network node and a radio setting of the neighboring network node.

3. The method according to claim 1,
wherein the network node (1) sends a request message to the configuration server (4) containing the geographical coordinates (x, y, z) of said network node (1).

4. The method according to claim 1,
wherein the configuration server (4) sends a return message to the network node (1) containing a set of identifiers for each neighboring network node of said network node (1).

5. The method according to claim 4,
wherein the return message further contains the geographical coordinates (x, y, z) of the neighboring network nodes of said network node (1).

6. The method according to claim 1,
wherein the network node (1) is connected to said configuration server (4) via an operation and maintenance (OAM) network (3).

7. The method according to claim 1,
wherein the network node (1) is formed by a base station of a wireless access network.

8. The method according to claim 1,
wherein the geographical coordinates (x, y, z) comprise a latitude (x), a longitude (y) and an altitude (z) of a network node.

9. The method according to claim 1,
wherein the network node (1) determines its geographical coordinates by means of a positioning device (6) and transmits the determined geographical coordinates to said configuration server (4) with a request message.

10. The method according to claim 9,
wherein the positioning device (6) is formed by a GPS receiver, a Galileo receiver or a Glonass receiver.

11. The method according to claim 9,
wherein the positioning device (6) is connected to the network node.

12. The method according to claim 9,
wherein the positioning device (6) is integrated in said network node.

13. The method according to claim 1,
wherein the network node (1) sends a request message containing a device-ID of a device (6) connected to said network node to said configuration server (4).

14. The method according to claim 13,
wherein the device-ID is formed by a MSISDN-number, an IMSI-number or an IMEI-number.

15. The method according to claim 13,
wherein the device-ID is forwarded by said configuration server (4) to a mobile network server (8) comprising a data base having for each device-ID associated geographical coordinates of the corresponding device (6) connected to said network node (1).

16. The method according to claim 15,
wherein the geographical coordinates of the device (6) connected to said network node (1) are transmitted by the mobile network server (8) to said configuration server (4) for the comparison with the geographical coordinates of other network nodes stored in the data base (7) of said configuration server (4).

17. The method according to claim 1,
wherein the configuration server (4) decides that the geographical coordinates of the requesting network node (1) and the geographical coordinates of another network node stored in said data base (7) match with each other when the difference between at least one corresponding coordinate of both network nodes is lower than an adjustable threshold value.

18. The method according to claim 1,
wherein the network node (1) is an immobile network node.

19. The method according to claim 1,
wherein the network node (1) is formed by a mobile network node.

20. The method according to claim 1,
wherein every time a further network node (1) is entered into the network neighboring network node data is updated for the complete network.

21. A configuration server (4) for auto-configuration of a network comprising network nodes (1) connected to said configuration server (4),
wherein this configuration server (4) is adapted to compare geographical coordinates of a requesting network node (1) with geographic coordinates of other network nodes of said network stored in the data base (7) and configured to transmit a set of identifiers of the matching network nodes to the requesting network node (1).

22. The configuration server according to claim 21,
wherein the configuration server (4) is configured to transmit configuration data to the network node (1).

23. A network node (1) connected to a configuration server (4),
wherein said network node (1) is configured to send a request message to the configuration server (4) which is adapted to compare geographical coordinates of said network node (1) with geographical coordinates of other network nodes and configured to transmit a return message received by said requesting network node (1) containing a set of identifiers of matching neighboring network nodes.

24. The network node according to claim 22,
wherein the network node (1) is formed by a base station of a wireless access network.

## Patentansprüche

1. Verfahren zum Erkennen von benachbarten Netzwerkknoten durch einen mit einem Konfigurationsserver (4) verbundenen Netzwerkknoten (1), wobei der Konfigurationsserver (4) geographische Koordinaten des Netzwerkknotens (1) mit geographischen Koordinaten von anderen Netzwerkknoten vergleicht, die in einer Datenbank (7) gespeichert sind, und einen Satz von Kennungen von übereinstimmenden benachbarten Netzwerkknoten an den Netzwerknoten (1) übermittelt.

2. Verfahren nach Anspruch 1,
wobei der Satz von Kennungen von jedem benachbarten Netzwerkknoten als Kennungen eine IP-Adresse des benachbarten Netzwerkknotens und eine Funkeinstellung des benachbarten Netzwerkknotens umfasst.

3. Verfahren nach Anspruch 1,
wobei der Netzwerkknoten (1) eine Anfragenachricht an den Konfigurationsserver (4) übermittelt, die die geographischen Koordinaten (x, y, z) des Netzwerkknotens (1) enthält.

4. Verfahren nach Anspruch 1,
wobei der Konfigurationsserver (4) eine Rücknachricht an den Netzwerkknoten (1) übermittelt, die einen Satz von Kennungen für jeden benachbarten Netzwerkknoten des Netzwerkknotens (1) enthält.

5. Verfahren nach Anspruch 4,
wobei die Rücknachricht ferner die geographischen Koordinaten (x, y, z) der benachbarten Netzwerkknoten des Netzwerkknotens (1) enthält.

6. Verfahren nach Anspruch 1,
wobei der Netzwerkknoten (1) mit dem Konfigurationsserver (4) über ein Betriebs- und Wartungsnetzwerk bzw. OAM-Netzwerk (3) verbunden ist.

7. Verfahren nach Anspruch 1,
wobei der Netzwerkknoten (1) durch eine Basisstation eines Drahtloszugangsnetzwerks ausgebildet ist.

8. Verfahren nach Anspruch 1,
wobei die geographischen Koordinaten (x, y, z) eine Breite (x), eine Länge (y) und eine Höhenlage (z) eines Netzwerkknotens umfassen.

9. Verfahren nach Anspruch 1,
wobei der Netzwerkknoten (1) seine geographischen Koordinaten mittels einer Positionierungsvorrichtung (6) bestimmt und die bestimmten geographischen Koordinaten mit einer Anfragenachricht an den Konfigurationsserver (4) übermittelt.

10. Verfahren nach Anspruch 9,
wobei die Positionierungsvorrichtung (6) durch einen GPS-Empfänger, einen Galileo-Empfänger oder einen Glonass-Empfänger ausgebildet ist.

11. Verfahren nach Anspruch 9,
wobei die Positionierungsvorrichtung (6) mit dem Netzwerkknoten verbunden ist.

12. Verfahren nach Anspruch 9,
wobei die Positionierungsvorrichtung (6) in dem Netzwerkknoten integriert ist.

13. Verfahren nach Anspruch 1,
wobei der Netzwerkknoten (1) eine Anfragenachricht, die eine Vorrichtungs-ID einer Vorrichtung (6), die mit dem Netzwerkknoten verbunden ist, enthält, an den Konfigurationsserver (4) sendet.

14. Verfahren nach Anspruch 13,
wobei die Vorrichtungs-ID durch eine MSISDN-Nummer, eine IMSI-Nummer oder eine IMEI-Nummer ausgebildet ist.

15. Verfahren nach Anspruch 13,
wobei die Vorrichtungs-ID durch den Konfigurationsserver (4) an einen Mobilnetzserver (8) weitergeleitet wird, der eine Datenbank umfasst, die für jede Vorrichtungs-ID assoziierte geographische Koordinaten der entsprechenden mit dem Netzwerkknoten (1) verbundenen Vorrichtung (6) aufweist.

16. Verfahren nach Anspruch 15,
wobei die geographischen Koordinaten der mit dem Netzwerkknoten (1) verbundenen Vorrichtung (6) durch den Mobilnetzserver (8) an den Konfigurationsserver (4) für den Vergleich mit den geographischen Koordinaten von anderen Netzwerkknoten, die in der Datenbank (7) des Konfigurationsservers (4) gespeichert sind, übermittelt werden.

17. Verfahren nach Anspruch 1,
wobei der Konfigurationsserver (4) entscheidet, dass die geographischen Koordinaten des anfragenden Netzwerkknotens (1) und die geographischen Koordinaten eines anderen Netzwerkknotens, die in der Datenbank (7) gespeichert sind, miteinander übereinstimmen, wenn die Differenz zwischen mindestens einer entsprechenden Koordinate von beiden Netzwerkknoten geringer als ein anpassbarer Schwellenwert ist.

18. Verfahren nach Anspruch 1,
wobei der Netzwerkknoten (1) ein immobiler Netzwerkknoten ist.

19. Verfahren nach Anspruch 1,
wobei der Netzwerkknoten (1) durch einen Mobilnetzknoten ausgebildet ist.

20. Verfahren nach Anspruch 1,
wobei jedes Mal, wenn ein weiterer Netzwerkknoten (1) in das Netzwerk eingeführt wird, die Nachbar-Netzwerkknoten-Daten für das gesamte Netzwerk aktualisiert werden.

21. Konfigurationsserver (4) für Autokonfiguration eines Netzwerks, umfassend mit dem Konfigurationsserver (4) verbundene Netzwerkknoten (1),
wobei dieser Konfigurationsserver (4) eingerichtet ist zum Vergleichen geographischer Koordinaten eines anfragenden Netzwerkknotens (1) mit geographischen Koordinaten von anderen Netzwerkknoten des Netzwerks, die in der Datenbank (7) gespeichert sind, und ausgelegt ist zum Übermitteln eines Satzes von Kennungen der übereinstimmenden Netzwerkknoten an den anfragenden Netzwerkknoten (1).

22. Konfigurationsserver nach Anspruch 21,
wobei der Konfigurationsserver (4) ausgelegt ist zum Übermitteln von Konfigurationsdaten an den Netzwerkknoten (1).

23. Netzwerkknoten (1), der mit einem Konfigurationsserver (4) verbunden ist,
wobei der Netzwerkknoten (1) ausgelegt ist zum Senden einer Anfragenachricht an den Konfigurationsserver (4), der eingerichtet ist zum Vergleichen geographischer Koordinaten des Netzwerkknotens (1) mit geographischen Koordinaten von anderen Netzwerkknoten und ausgelegt ist zum Übermitteln einer Rücknachricht, die durch den anfragenden Netzwerkknoten (1) empfangen wird, welche einen Satz von Kennungen von übereinstimmenden benachbarten Netzwerkknoten enthält.

24. Netzwerkknoten nach Anspruch 22,
wobei der Netzwerkknoten (1) durch eine Basisstation eines Drahtloszugangsnetzwerks ausgebildet ist.

## Revendications

1. Un procédé de découverte de noeuds de réseau voisins par un noeud de réseau (1) raccordé à un serveur de configuration (4), dans lequel ledit serveur de configuration (4) compare des coordonnées géographiques du noeud de réseau (1) à des coordonnées géographiques d'autres noeuds de réseau conservées en mémoire dans une base de données (7) et transmet un ensemble d'identifiants de noeuds de réseau voisins appariés audit noeud de réseau (1).

2. Le procédé selon la revendication 1,
dans lequel ledit ensemble d'identifiants de chaque noeud de réseau voisin comprend en tant qu'identifiants une adresse IP du noeud de réseau voisin et un réglage radio du noeud de réseau voisin.

3. Le procédé selon la revendication 1,
dans lequel le noeud de réseau (1) envoie un message de demande au serveur de configuration (4) contenant les coordonnées géographiques (x, y, z) dudit noeud de réseau (1).

4. Le procédé selon la revendication 1,
dans lequel le serveur de configuration (4) envoie un message en retour au noeud de réseau (1) contenant un ensemble d'identifiants pour chaque noeud de réseau voisin dudit noeud de réseau (1).

5. Le procédé selon la revendication 4,
dans lequel le message en retour contient en outre les coordonnées géographiques (x, y, z) des noeuds de réseau voisins dudit noeud de réseau (1).

6. Le procédé selon la revendication 1,
dans lequel le noeud de réseau (1) est raccordé audit serveur de configuration (4) par l'intermédiaire d'un réseau d'exploitation et de maintenance (OAM) (3).

7. Le procédé selon la revendication 1,
dans lequel le noeud de réseau (1) est formé par une station de base d'un réseau d'accès sans fil.

8. Le procédé selon la revendication 1,
dans lequel les coordonnées géographiques (x, y, z) comprennent une latitude (x), une longitude (y) et une altitude (z) d'un noeud de réseau.

9. Le procédé selon la revendication 1,
dans lequel le noeud de réseau (1) détermine ses coordonnées géographiques au moyen d'un dispositif de positionnement (6) et transmet les coordonnées géographiques déterminées audit serveur de configuration (4) avec un message de demande.

10. Le procédé selon la revendication 9,
dans lequel le dispositif de positionnement (6) est formé par un récepteur GPS, un récepteur Galileo ou un récepteur Glonass.

11. Le procédé selon la revendication 9,
dans lequel le dispositif de positionnement (6) est raccordé au noeud de réseau.

12. Le procédé selon la revendication 9,
dans lequel le dispositif de positionnement (6) est intégré dans ledit noeud de réseau.

13. Le procédé selon la revendication 1,
dans lequel le noeud de réseau (1) envoie un message de demande contenant un identifiant de dispositif d'un dispositif (6) raccordé audit noeud de réseau audit serveur de configuration (4).

14. Le procédé selon la revendication 13,
dans lequel l'identifiant de dispositif est formé par un numéro MSISDN, un numéro IMSI ou un numéro IMEI.

15. Le procédé selon la revendication 13,
dans lequel l'identifiant de dispositif est transféré par ledit serveur de configuration (4) à un serveur de réseau mobile (8) comprenant une base de données possédant pour chaque identifiant de dispositif des coordonnées géographiques associées du dispositif correspondant (6) raccordé audit noeud de réseau (1).

16. Le procédé selon la revendication 15,
dans lequel les coordonnées géographiques du dispositif (6) raccordé audit noeud de réseau (1) sont transmises par le serveur de réseau mobile (8) audit serveur de configuration (4) pour la comparaison aux coordonnées géographiques d'autres noeuds de réseau conservées en mémoire dans la base de données (7) dudit serveur de configuration (4).

17. Le procédé selon la revendication 1,
dans lequel le serveur de configuration (4) décide que les coordonnées géographiques du noeud de réseau demandeur (1) et les coordonnées géographiques d'un autre noeud de réseau conservées en mémoire dans ladite base de données (7) sont appariées les unes avec les autres lorsque la différence entre au moins une coordonnée correspondante des deux noeuds de réseau est inférieure à une valeur seuil ajustable.

18. Le procédé selon la revendication 1,
dans lequel le noeud de réseau (1) est un noeud de réseau immobile.

19. Le procédé selon la revendication 1,
dans lequel le noeud de réseau (1) est formé par un noeud de réseau mobile.

20. Le procédé selon la revendication 1,
dans lequel, chaque fois qu'un autre noeud de réseau (1) est entré dans le réseau, des données de noeud de réseau voisin sont actualisées pour le réseau complet.

21. Un serveur de configuration (4) destiné à une auto-configuration d'un réseau comprenant des noeuds de réseau (1) raccordés audit serveur de configuration (4),
dans lequel ce serveur de configuration (4) est adapté de façon à comparer des coordonnées géographiques d'un noeud de réseau demandeur (1) à des coordonnées géographiques d'autres noeuds de réseau dudit réseau conservées en mémoire dans la base de données (7) et est configuré de façon à transmettre un ensemble d'identifiants des noeuds de réseau appariés au noeud de réseau demandeur (1).

22. Le serveur de configuration selon la revendication 21, dans lequel le serveur de configuration (4) est configuré de façon à transmettre des données de configuration au noeud de réseau (1).

23. Un noeud de réseau (1) raccordé à un serveur de configuration (4),
dans lequel ledit noeud de réseau (1) est configuré de façon à envoyer un message de demande au serveur de configuration (4) qui est adapté de façon à comparer des coordonnées géographiques dudit noeud de réseau (1) à des coordonnées géographiques d'autres noeuds de réseau et est configuré de façon à transmettre un message en retour reçu par ledit noeud de réseau demandeur (1) contenant un ensemble d'identifiants de noeuds de réseau voisins appariés.

24. Le noeud de réseau selon la revendication 22,
dans lequel le noeud de réseau (1) est formé par une station de base d'un réseau d'accès sans fil.
